# EUROPÄISCHE PATENTSCHRIFT

(11) **EP 3 158 115 B1**
(45) Veröffentlichungstag und Bekanntmachung des Hinweises auf die Patenterteilung: **07.11.2018**
(21) Anmeldenummer: 15722931.1
(22) Anmeldetag: 11.05.2015
(51) Int. Cl.: D01F 6/92

(54) **MONOFILAMENTE MIT HOHER ABRIEB- UND FORMBESTÄNDIGKEIT UND NIEDRIGER GLEITREIBUNG, TEXTILE FLÄCHENGEBILDE DARAUS UND DEREN VERWENDUNG**
MONOFILAMENTS HAVING HIGH ABRASION RESISTANCE AND DIMENSIONAL STABILITY AND LOW GLIDEABILITY, TEXTILE FABRICS COMPOSED THEREOF AND USE THEREOF
MONOFILAMENTS AYANT UNE RÉSISTANCE À L'ABRASION ET UNE STABILITÉ DIMENSIONNELLE ÉLEVÉES ET UN FAIBLE COEFFICIENT DE FROTTEMENT, PRODUITS TEXTILES FABRIQUÉS À PARTIR DE CEUX-CI ET LEUR UTILISATION

(30) Priorität: 20.06.2014 DE 102014009238
(43) Veröffentlichungstag der Anmeldung: 26.04.2017
(73) Patentinhaber: Perlon Nextrusion Monofil GmbH, 86399 Bobingen (DE)
(72) Erfinder: BRÜNING, Hans-Joachim, 86179 Augsburg (DE); HABER, Ralf, 86517 Wehringen (DE); HECKENBENNER, Pascal, 86199 Augsburg (DE)
(74) Vertreter: Ackermann, Joachim
(86) Internationale Anmeldenummer: PCT/EP2015/000969
(87) Internationale Veröffentlichungsnummer: WO 2015/192932

(56) Entgegenhaltungen:
- EP-A1- 0 976 854
- EP-A2- 0 387 395
- WO-A1-2009/021967
- DE-A1-102004 041 755
- US-A1- 2009 209 695

## Beschreibung

Die vorliegende Erfindung betrifft ein Monofilament, das sich zur Herstellung von textilen Flächengebilden einsetzen lässt, die insbesondere in feucht-heißen Umgebungen mit hoher mechanischer Belastung zum Einsatz gelangen.

Die aus den erfindungsgemäßen Monofilamenten hergestellten textilen Flächengebilde lassen sich vorzugsweise als Rundsieb für poröse Papiermaschinenbespannungen einsetzen. Diese kommen besonders bevorzugt in der Blattbildungspartie von Papiermaschinen zum Einsatz.

Die Unterschicht von in der Blattbildungspartie von Papiermaschinen eingesetzten Formingsieben ist wegen der in dieser Partie herrschenden Druckverhältnisse (Saugboxen) erhöhtem Verschleiß ausgesetzt. Deshalb werden auf der Unterseite dieser Siebe bislang wechselweise Monofilamente aus Polyethylenterephthalat (nachstehend auch "PET" genannt) und aus Polyamid eingesetzt. Diese Kombination hat sich im Vergleich mit reinem PET als abriebbeständiger erwiesen. Nachteilig an diesem Ansatz ist, dass durch die höhere Wasseraufnahme des Polyamids sich das Schussmaterial des Gewebes ausdehnt. Dieses führt im Randbereich des Siebes zum unerwünschten Aufstellen der Siebränder ("Edge-Curling").

DE 10 2004 041 755 A1 offenbart Fasern enthaltend aliphatische-aromatische Polyester und kugelförmige Teilchen aus anorganischen Oxiden mit einem mittleren Durchmesser von kleiner gleich 100 nm. In dieser Schrift wird offenbart, dass die Abriebbeständigkeit der dort beschriebenen Fasern durch den Zusatz von Polycarbonat gesteigert werden kann. Die Verwendung von thermoplastisch elastomeren Copolymeren wird nicht offenbart.

Die EP 387 395 A2 beschreibt Monofilamente, die aus einem Gemisch von 60 bis 90 % PET, 10 % bis 40 % thermoplastischem Polyurethan-Elastomer (nachstehend auch "TPU" genannt) und bis zu 5 % Carbodiimid bestehen. Diese Monofilamente, im Unterschuss eingesetzt, vermeiden das Edge-Curling. Lediglich in den Kröpfungspunkten mit der Webkette zeigt sich eine leichte Abflachung durch das weichere Material. Dadurch wird die Entwässerungsleistung des Forming-Siebes in der Papiermaschine beeinflusst.

Die DE 44 10 399 A1 umgeht dieses Problem, indem ein modifiziertes PET mit geringerem Schmelzpunkt verwendet wird, der im Bereich von 200 bis 230 °C liegt. Einen anderen Lösungsansatz nennt die DE 195 11 852 A1, indem das TPU durch ein thermoplastisches Polyester-Elastomer (nachstehend auch "TPE-E" genannt) ersetzt wird, das zusammen mit unmodifiziertem PET versponnen wird.

DE 10 2006 012 048 A1 offenbart schmelzgesponnene Polyesterfäden enthaltend eine Kombination von thermoplastischen und elastischen Copolyestern und von thermoplastischen Polyester-Copolymeren abgeleitet von unterschiedlichen Dicarbonsäuren oder deren polyesterbildenden Derivaten. Diese Fäden zeichnen sich durch eine sehr gute Abriebbeständigkeit und gleichzeitig durch eine hohe Formbeständigkeit aus.

Die vorgenannten abriebbeständigen Monofilamente mit thermoplastischen Elastomeren als Komponente haben alle den Nachteil, dass sich durch die Anwesenheit von Weichsegementen in den thermoplastischen Elastomeren, die in den Schussfäden eingesetzt worden sind, diese Schussfäden in den Kröpfungspunkten des Gewebes stark abflachen, was zu einer verringerten Entwässerungsleistung der Siebe führt.

In der DE 195 11 853 A1 wird dieses Problem teilweise dadurch gelöst, dass das Monofilament aus einem Kern aus PET und einem Mantel aus einem Gemisch aus TPE-E mit modifiziertem PET bestehen. Nach längerem Betrieb ist das Mantelmaterial allerdings abgerieben und der Kern aus PET liegt offen und ist dem Verschleiß ausgesetzt.

Darüber hinaus wurde gefunden, dass die erfindungsgemäßen Monofilamente einen überraschend geringen Gleitwiderstand aufweisen und damit eine deutliche Verringerung der Antriebsleistung der Maschine ermöglichen, typischerweise eine Verringerung um mehr als 10 % im Vergleich zu Sieben aus herkömmlichen Monofilamenten.

Aufgabe dieser Erfindung ist die Bereitstellung einer Materialkombination, die eine hohe Beständigkeit in feucht-heißen Umgebungen zeigt, die eine geringe Gleitreibung sowie einerseits eine sehr gute Abriebbeständigkeit aufweist und andererseits äußerst formstabil ist, so dass sowohl das Edge-Curling als auch die Abflachung an den Kröpfungspunkten weitgehend vermieden wird.

Gelöst wird diese Aufgabe durch die Bereitstellung von Monofilamenten, die ausgewählte Komponenten gemäß Anspruch 1 enthalten.

Die vorliegende Erfindung betrifft daher ein Polyester-Monofilament enthaltend
a) 60 bis 85 Gew. % eines mit Dicarbonsäure modifizierten Polyethylenterephthalat,
b) 14,4 bis 30 Gew. % eines thermoplastischen elastomeren BlockCopolymers,
c) 0,05 bis 10 Gew. % eines Polycarbonats, und
d) 0,1 bis 10 Gew. % eines Carbodiimid-Stabilisators, wobei die Mengenangaben auf die Gesamtmenge des Monofilaments bezogen sind.

Es hat sich gezeigt, dass durch das hinzugefügte Polycarbonat die Polymermischung vernetzt wird. Das hat eine Erhöhung der Formstabilität des daraus hergestellten Monofilaments zu Folge. Besonders überraschend ist, dass durch das Hinzufügen von Carbodiimid die Vernetzung nochmals gesteigert werden kann.

Als Polyester der Komponente a) werden erfindungsgemäß ausgewählte Rohstoffe gemäß Anspruch 1 eingesetzt, die nach dem Verspinnen, Verstrecken und gegebenenfalls Relaxieren Monofilamente mit dem oben genannten Eigenschaftsprofil ergeben.

Dabei handelt es sich um Polyethylenterephthalat-Einheiten enthaltende Copolymere. Diese Polymeren leiten sich also ab von Ethylenglykol sowie von Terephthalsäure oder deren polyesterbildenden Derivaten, wie den Dicarbonsäureestern oder -chloriden und weiteren Dicarbonsäuren oder deren polyesterbildenden Derivaten.

Diese thermoplastischen Polyester sind an sich bekannt. Bausteine von thermoplastischen Copolyestern a) sind das oben genannte Ethylenglykol sowie die oben genannten Dicarbonsäuren bzw. entsprechend aufgebaute polyesterbildende Derivate. Hauptsäurebestandteil der Polyester der Komponente a) sind neben Ethylenglykol und Terephthalsäure geringere Anteile, vorzugsweise bis zu 30 Mol %, bezogen auf die Gesamtmenge der Dicarbonsäuren, andere aromatische und/oder aliphatische und/oder cycloaliphatische Dicarbonsäuren, vorzugsweise aromatische Verbindungen, wie z.B. Phthalsäure, 4,4'-Biphenyldicarbonsäure oder insbesondere Isophthalsäure und/oder aliphatische Dicarbonsäuren, wie z.B. Adipinsäure oder Sebacinsäure.

Zusätzlich zum Ethylenglykol können geringe Mengen, beispielsweise bis zu 30 Mol %, bezogen auf die Gesamtmenge der Alkohole, an geeigneten zweiwertigen Alkoholen eingesetzt werden. Typische Vertreter davon sind aliphatische und/oder cycloaliphatische Diole, beispielsweise Propandiol, 1,4-Butandiol, Cyclohexandimethanol oder deren Gemische.

Komponente a) ist ein mit Dicarbonsäure modifiziertes Polyethylenterephthalat, insbesondere ein mit aromatischer Dicarbonsäure modifiziertes Polyethylenterephthalat oder ein mit aliphatischer Dicarbonsäure modifiziertes Polyethylenterephthalat.

Ganz besonders bevorzugt eingesetzte Komponenten a) sind mit aromatischer Dicarbonsäure modifiziertes Polyethylenterephthalat, insbesondere mit Isophthalsäure modifiziertes Polyethylenterephthalat oder mit Phthalsäure modifiziertes Polyethylenterephthalat.

Ebenfalls ganz besonders bevorzugt eingesetzte Komponenten a) sind mit aliphatischer Dicarbonsäure modifiziertes Polyethylenterephthalat, insbesonder ein mit Adipinsäure modifiziertes Polyethylenterephthalat oder ein mit Sebazinsäure modifiziertes Polyethylenterephthalat.

Die erfindungsgemäß eingesetzten Polyester der Komponente a) weisen üblicherweise Lösungsviskositäten (IV-Werte) von mindestens 0,60 dl/g, vorzugsweise von 0,60 bis 1,05 dl/g, besonders bevorzugt von 0,62 - 0,93 dl/g, auf (gemessen bei 25°C in Dichloressigsäure (DCE)).

Bei den thermoplastischen und elastomeren Block-Copolymeren der Komponente b) kann es sich um unterschiedlichste Typen handeln. Solche Block-Copolymeren sind dem Fachmann bekannt.

Beispiele für Komponenten b) sind thermoplastische und elastomere Polyurethane (TPE-U), thermoplastische und elastomere Polyester (TPE-E), thermoplastische und elastomere Polyolefine (TPE-O) und thermoplastische und elastomere Styrol-Blockcopolymere (TPE-S).

Die thermoplastischen und elastomeren Block-Copolymeren b) können aus unterschiedlichsten Monomerkombinationen aufgebaut sein. In der Regel handelt es sich um Blöcke aus sogenannten Hart- und Weichsegmenten. Die Weichsegmente leiten sich bei den TPE-U und den TPE-E typischerweise von Polyalkylenglykolethern ab. Die Hartsegmente leiten sich bei den TPE-U und den TPE-E typischerweise von kurzkettigen Diolen oder Diaminen ab. Neben den Diolen bzw. Diaminen werden die Hart- und Weichsegmente von aliphatischen, cycloaliphatischen und/oder aromatischen Dicarbonsäuren oder Diisocyanaten aufgebaut.

Beispiele für thermoplastische Polyolefine sind Block-Copolymere, die Blöcke aus Ethylen-Propylen-Butadien und aus Polypropylen (EPDM/PP) oder aus Nitril-Butadien und aus Polypropylen (NBR/PP) aufweisen.

Beispiele für thermoplastische und elastomere Styrol-Blockcopolymere sind Block-Copolymere, die Blöcke aus Styrol-Ethylen und aus Propylen-Styrol (SEPS) oder aus aus Styrol-Ethylen und aus Butadien-Styrol (SEBS) oder aus Styrol und aus Butadien (SBS) aufweisen.

Unter thermoplastischen und elastomeren Block-Copolymeren sind im Rahmen dieser Beschreibung Block-Copolymere zu verstehen, der sich bei Raumtemperatur vergleichbar den klassischen Elastomeren verhalten, sich jedoch unter Wärmezufuhr plastisch verformen lassen und somit ein thermoplastisches Verhalten zeigen. Diese thermoplastischen und elastomeren Block-Copolymeren haben in Teilbereichen physikalische Vernetzungspunkte (z.B. Nebenvalenzkräfte oder Kristallite), die sich bei Wärme auflösen, ohne dass sich die Polymermoleküle zersetzen.

Bevorzugt sind Polyester-Monofilamenteenthaltend als Komponente b) ein thermoplastisches Polyester-Elastomer.

Bevorzugt werden als Komponente b) Copolyester eingesetzt, die wiederkehrende Struktureinheiten aufweisen, die sich ableiten von einer aromatischen Dicarbonsäure und einem aliphatischen Diol sowie einem Polyalkylenglykol.

Bevorzugt eingesetzte thermoplastische Polyester-Elastomere b) enthalten wiederkehrende Struktureinheiten, die sich ableiten von Terephtalsäure, Ethylenglykol und Polyethylenglykol, von Terephthalsäure, Butylenglykol und Polyethylenglykol, von Terephthalsäure, Butylenglykol und Polybutylenglykol, von Naphthalindicarbonsäure, Ethylenglykol und Polyethylenglykol, von Naphthalindicarbonsäure, Butylenglykol und Polyethylenglykol, von Naphthalindicarbonsäure, Butylenglykol und Polybutylenglykol, von Terephtalsäure, Isophthalsäure, Ethylenglykol und Polyethylenglykol, von Terephthalsäure, Isophthalsäure, Butylenglykol und Polyethylenglykol, und von Terephthalsäure, Isophtalsäure, Butylenglykol und Polybutylenglykol.

Insbesondere werden als Komponenten b) Blockcopolymere enthaltend Polybutylenterephthalat-Blöcke und Polyethylenglykolterephthalat-Blöcke eingesetzt.

Polymere der Komponente b) sind im Handel erhältlich, beispielsweise als Hytrel® (DuPont/US), Heraflex® E (Radicinovacips/IT), Arnitel® (DSM Engineering Plastics/NL) oder Keyflex® (LG Chemical/KR).

Als Komponente c) kommen Polycarbonate zum Einsatz. Dabei handelt es sich um Kunststoffe aus der Gruppe der Polyester, genauer gesagt aus der Gruppe der polymeren Ester der Kohlensäure mit zweiwertigen Alkoholen. Bevorzugt werden Polycarbonate eingesetzt, die sich von Bisphenolen ableiten, insbesondere von 2,2-Bis(4-hydroxyphenyl)-propan (Bisphenol A). Polycarbonate werden unter den Handelsnamen Makrolon® (Bayer) oder Lexan® (Sabic) vermarktet.

Alternativ zu von Bisphenol A abgeleiteten Polycarbonaten werden auch solche Typen vermarktet, welche sich ableiten von Bisphenol S, von Tetramethylbisphenol A oder von 1,1-Bis(4-hydroxyphenyl)-3,3,5-trimethylcyclohexan (BPTMC). Polycarbonate sind in der Regel amorph und weisen einen Kristallitanteil von weniger als 5 % auf. Sie zeichnen sich durch hohe Festigkeit, Schlagzähigkeit, Steifigkeit und Härte aus. Polycarbonate sind weitgehend beständig gegenüber Einflüssen von Witterung und Strahlung.

Bevorzugt sind Polyester-Monofilamente, die als Komponente c) ein Polycarbonat enthalten, das sich von Bisphenolen, insbesondere von Bisphenol A ableitet.

Die erfindungsgemäßen Polyester-Monofilamente sind durch Carbodiimid stabilisiert. Dieses wird als Komponente d) der verspinnbaren Masse zugesetzt.

Bevorzugt werden Polyester-Monofilamente mit einem Gehalt an freien Carboxylgruppen von kleiner gleich 10 mval/kg, vorzugsweise kleiner gleich 5 mval/kg, insbesondere kleiner gleich 2 mVal/kg, hergestellt.

Dieses wird durch Zusatz der Komponente d) erreicht, die ein Mittel zum Verschluss von freien Carboxylgruppen darstellt.

Derartig ausgerüstete Polyester-Monofilamente sind gegenüber hydrolytischem Abbau stabilisiert und eignen sich besonders zum Einsatz in feucht-heißen Umgebungen, z.B. in Papiermaschinen oder als Filter.

Ganz besonders bevorzugt werden als Komponente d) polymere Carbodiimide eingesetzt.

Carbodiimide werden unter dem Handelsnamen Stabaxol® (Rheinchemie) vermarktet.

Die Mengen an Komponenten a), b), c) und d) in den erfindungsgemäßen Polyester-Monofilamenten können in den oben angegebenen Bereichen gewählt werden.

Der Anteil der Komponente a) in den erfindungsgemäßen Polyester-Monofilamenten beträgt typischerweise 60 bis 85 Gew. %, vorzugsweise 65 bis 80 Gew. %, und ganz besonders bevorzugt 70 bis 80 Gew. %, bezogen auf die Gesamtmenge des Monofilaments.

Der Anteil der Komponente b) in den erfindungsgemäßen Polyester-Monofilamenten beträgt typischerweise 14,4 bis 30 Gew. %, vorzugsweise 15 bis 25 Gew. %, und ganz besonders bevorzugt 20 bis 25 Gew. %, bezogen auf die Gesamtmenge des Monofilaments.

Der Anteil der Komponente c) in den erfindungsgemäßen Polyester-Monofilamenten beträgt typischerweise 0,05 bis 10 Gew. %, vorzugsweise 0,1 bis 3 Gew. %, ganz besonders bevorzugt 0,5 bis 3 Gew. % und insbesondere bevorzugt 0,5 bis 1,5 Gew. %, bezogen auf die Gesamtmenge des Monofilaments.

Der Anteil der Komponente d) in den erfindungsgemäßen Polyester-Monofilamenten beträgt typischerweise 0,1 bis 10 Gew. %, vorzugsweise 0,3 bis 4,5 Gew. %, bezogen auf die Gesamtmenge des Monofilaments.

Typischerweise enthalten die Monofilamente 60 bis 85 Gew. % an Komponente a), 14,4 bis 30 Gew. % an Komponente b), 0,05 bis 10 Gew. % an Komponente c) und 0,1 bis 10 Gew. % an Komponente d), jeweils bezogen auf die Gesamtmasse des Monofilaments.

Besonders bevorzugt werden Polyester-Monofilamente, die Komponente a) in einer Menge von 70 bis 80 Gew. %, Komponente b) in einer Menge von 20 bis 25 Gew. %, Komponente c) in einer Menge von 0,5 bis 3 Gew. % und Komponente d) in einer Menge von 0,3 bis 4,5 Gew. % enthalten.

Ganz besonders bevorzugt enthält das erfindungsgemäße Monofilament 70,5-79,1 Gew. % an mit 10 bis 15 Gew. 12 % Isophthalsäure modifiziertes PET, 20-25 Gew. % an TPE-E, 0,5-2,5 Gew. % an Polycarbonat und 0,4-4,5 Gew. % an polymerem Carbodiimid.

Die erfindungsgemäß eingesetzte Kombination der Komponenten a), b), c) und d) verleiht den Fäden neben einer ausgezeichneten Abriebbeständigkeit gute textiltechnologische Eigenschaften, insbesondere eine sehr niedrige Gleitreibung und eine hohe Formbeständigkeit kombiniert mit einer ausgezeichneten Hydrolysebeständigkeit. Insbesondere die äußerst guten Werte für die Abriebbeständigkeit und für die niedrige Gleitreibung waren für den Fachmann nicht zu erwarten.

Die Auswahl der im Einzelfall eingesetzten Komponenten a) bis d) erfolgt durch den Fachmann. So sind die Komponenten a) bis d) so zu wählen, dass deren Verarbeitung bei Temperaturen erfolgen kann, bei denen keine der Komponenten einer nennenswerten Zersetzung unterliegt.

Das erfindungsgemäße Polyester-Monofilament kann neben den oben beschriebenen Komponenten a) bis d) zusätzlich weitere und übliche Zusätze e) enthalten. Die Menge an solchen Komponenten e) beträgt typischerweise 0,001 bis 10 Gew. %, bezogen auf die Gesamtmasse des Monofilaments.

Beispiele für übliche Zusätzen e) sind Antioxidantien, UV-Stabilisatoren, Füllstoffe, Pigmente, Biozide, Zusätze zur Erhöhung der elektrischen Leitfähigkeit, Zusätze zur Erhöhung der Abriebbeständigkeit, reibungsvermindernde Zusätze, Avivagen, Verarbeitungshilfsmittel, Weichmacher, Gleitmittel, Mattierungsmittel, Viskositätsmodifizierer, Kristallisationbeschleuniger oder Kombinationen von zwei oder mehreren davon.

Die zur Herstellung der erfindungsgemäßen Fäden benötigten Komponenten a), b), c), d) und e) sind an sich bekannt, teilweise kommerziell erhältlich oder können nach an sich bekannten Verfahren hergestellt werden.

Der Titer der erfindungsgemäßen Monofilamente kann in weiten Bereichen schwanken. Beispiele dafür sind 50 bis 45.000 dtex, insbesondere 100 bis 4.000 dtex.

Die Querschnittsform der erfindungsgemäßen Monofilamente kann beliebig sein, beispielsweise rund, oval oder n-eckig, wobei n größer gleich 3 ist.

Die erfindungsgemäßen Monofilamente können nach an sich bekannten Verfahren hergestellt werden.

Ein typisches Herstellverfahren umfasst die Maßnahmen:
i) Vermischen von Komponenten a), b), c) und d) oder von Komponente a) und einem Masterbatch enthaltend Komponenten b), c) und d) in einem Extruder,
ii) Extrudieren des Gemisches enthaltend Komponenten a), b), c) und d) durch eine Spinndüse,
iii) Abziehen des gebildeten Monofilaments,
iv) gegebenenfalls Verstrecken und/oder Relaxieren des Monofilaments, und
v) Aufspulen des Monofilaments.

Eine oder mehrere der Komponenten b), c) und d) können auch in Form eines Masterbatches eingesetzt werden. So lässt sich insbesondere das Carbodiimid als Masterbatch in Polyester gut dosieren und in die Komponenten a), b) und c) einmischen. Auch Komponente b) kann vorzugsweise in Form eines Masterbatches in die Komponenten a), c) und d) eingemischt werden.

Die erfindungsgemäßen Monofilamente werden bei der Herstellung ein- oder mehrfach verstreckt.

Besonders bevorzugt wird zur Herstellung der Monofilamente als Komponente a) ein durch Festphasenkondensation hergestellter Polyesterrohstoff eingesetzt.

Nach dem Aufschmelzen und Verpressen der Polymerschmelze durch eine Spinndüse wird der heiße Polymerfaden abgekühlt, vorzugsweise in einem Wasserbad, und anschließend ein- oder mehrfach verstreckt, gegebenenfalls fixiert und aufgespult, wie es aus dem Stand der Technik für die genannten schmelzspinnbaren Polyester bekannt ist.

Bevorzugt werden die erfindungsgemäßen Monofilamente zur Herstellung von textilen Flächenkonstruktionen, insbesondere von Geweben, Spiralgeweben, Gelegen oder Gestricken, eingesetzt. Diese textilen Flächenkonstruktionen werden vorzugsweise in Sieben eingesetzt.

Die Erfindung betrifft daher auch ein textiles Flächengebilde enthaltend die oben beschriebenen Monofilamente, insbesondere textile Flächengebilde in Form eines Gewebes, Gestricks, Gewirkes, Geflechts oder Geleges.

Die erfindungsgemäßen Monofilamente lassen sich auf allen industriellen Gebieten einsetzen. Bevorzugt kommen sie bei Anwendungen zum Einsatz, in denen mit einem erhöhten Verschleiß sowie mit hoher mechanischer Belastung in feucht-heißen Umgebungen zu rechnen ist. Beispiele dafür sind der Einsatz in Siebgeweben und Filtertüchern für Gas- und Flüssigkeitsfilter, in Trockenbändern, beispielsweise zur Herstellung von Lebensmitteln oder insbesondere von Papier.

Die Erfindung betrifft auch die Verwendung des oben beschriebenen Polyester-Monofilaments als Papiermaschinenbespannung, in Förderbändern und als Filtrationssiebe.

Bevorzugt werden die oben beschriebenen Polyester-Monofilamente als Papiermaschinenbespannung in der Blattbildungspartie und/oder in der Trockenpartie der Papiermaschine eingesetzt.

Die vorliegende Erfindung wird durch die folgenden Beispiele ausführlicher beschrieben. Diese Beispiele dienen nur zur Erläuterung der Erfindung und sind nicht als Einschränkung zu verstehen.

### Ausführungsbeispiele 1 bis 3

Ausgangsrohstoff war in ein in der Polykondensation mit 12 Gew.% Isophthalsäure und 88 Gew. % Terephthalsäure modifiziertes Polyethylenterephthalat (PET-Type 153 von INVISTA Resins & Fibres GmbH, Hattersheim). Zu 75,5 Gew. % des Rohstoffs wurden 20,0 Gew. % eines elastomeren Polyesters

(TPE-E Type E3918 von Heraflex), 4,0 Gew. % eines Dicarbodiimids (Stabilisator KE 9464 von Rheinchemie) und 0,5 Gew. % eines Polycarbonats (Makrolon® 2458 von Bayer) vor dem Extruder gravimetrisch zudosiert.

Die polymere Mischung wurde im Extruder bei 250° C bis 270° C aufgeschmolzen, mittels einer Zahnradpumpe in ein Spinnpack gedrückt und anschließend in ein Wasserbad von 68° C versponnen. Es folgte eine mehrfache Verstreckung unter Wärmeeinwirkung mit Thermofixierung sowie anschließend die Aufspulung der Monofilamente.

Analog zu Beispiel 1 wurden die Monofilamente der Beispiele 2 und 3 hergestellt.

In der nachfolgenden Tabelle 1 sind Zusammensetzung und die Textilwerte der erhaltenen Monofilamente angegeben. In der nachfolgenden Tabelle 2 finden sich die Fahrdaten für die Herstellung des Monofilaments des Beispiels 3.

**Tabelle 1**

| | Monofil Beispiel 1 | Monofil Beispiel 2 | Monofil Beispiel 3 |
|---|---|---|---|
| Durchmesser (mm) | 0,352 | 0,350 | 0,350 |
| PET-Type 153 (Gew. %) | 75,5 | 70,5 | 75,2 |
| TPE-E Type E3918 (Gew. %) | 20,0 | 25,0 | 20,0 |
| Stabilisator KE 9464 (Gew. %) | 4,0 | 4,0 | 4,0 |
| Makrolon 2458 (Gew. %) | 0,5 | 0,5 | 0,8 |
| Feinheit (dtex) | 1238 | 1248 | 1237 |
| spez. Festigkeit (cN/tex) | 19,5 | 17,8 | 20,7 |
| Höchstzugkraftdehnung (%) | 76,1 | 115,6 | 65,9 |
| Bezugsdehnung 15 cN/tex (%) | 47,0 | 93,6 | 33,3 |
| Bezugsdehnung 20 cN/tex (%) | 79,8 | - | 60,5 |
| Thermoschrumpf 160°C/30'(%) | 6,25 | 6,8 | 5,66 |
| Thermoschrumpf 180°C/30'(%) | 12,8 | 13,9 | 10,4 |
| Sekantenmodul (GPa) | 4,8 | 4,3 | 5,3 |
| Young-Modul (kg/mm²) | 489,5 | 438,9 | 546,0 |
| Knotenfestigkeit (cN/tex) | n.b. | n.b. | n.b. |
| Schlingenfestigkeit (cN/tex) | n.b. | n.b. | n.b. |
| max. Schrumpfkraft (°C / cN) | 164/24,91 | 70/16,7 | 173/33,3 |
| Schrumpf bei 180°C (%) | 3,67 | -1,1 | 4,8 |
| spez. Viskosität in Dichloressigsäure | 1163 | 1159 | n.b. |

**Tabelle 2: Fahrdaten für das Monofil von Beispiel 3**

| | |
|---|---|
| Massetemperatur Extruder | 245 - 256 °C |
| Massetemperatur Spinnpack | 253 °C |
| Druck am Spinnpack | 8,8 MPa |

| Wassertemperaturen | |
|---|---|
| Spinnwanne | 68 °C |
| Streckbad 1 | 90 °C |
| Streckbad 2 | 90 °C |
| | |
| Lufttemperatur Fixierkanal | 225 °C |
| | |

| Streckverhältnisse | |
|---|---|
| Streckwerk 4 : Streckwerk 1 | 3,869 : 1 |
| Streckwerk 4 : Streckwerk 2 | 1,0714 : 1 |
| Streckwerk 4 : Streckwerk 3 | 0,938 : 1 |
| Geschwindigkeit Streckwerk 4 | 150,1 m/min |

Vergleichsbeispiele V1 bis V8 und Beispiele 4 bis 6: Prüfung der Abriebbeständigkeit

Analog zur Beschreibung im Ausführungsbeispiel 1 wurden Monofilamente hergestellt. Zusammensetzung und Mengen der bei der Herstellung verwendeten Komponenten sowie die bei diesen Monofilamenten ermittelten Abriebwerte sind in der nachfolgenden Tabelle 3 aufgeführt. Polymerdurchsatz und Verstreckung wurden so gewählt, dass Monofilamente mit einem Durchmesser von 0,25 mm erhalten wurden.

Diese Monofilamente wurden zu 100% im Unterschuss von mehrlagigen Forminggeweben identischer Konstruktion getestet. Der Abriebtest wurde in einem Prüfgerät Einlehner AT 2000 durchgeführt. Dabei wurden folgende Prüfbedingungen verwendet:
Verwendete Suspension: 1% CaCO₃ (Omya HC40BG) in 99% Wasser nicht temperiert, bei Prüfbeginn ca. 25°C

| | |
|---|---|
| Reibkörper: | Al₂O₃ |
| Umschlingungswinkel: | 180° |
| Lauflänge: | 25.000 m |
| Vorspanngewicht: | 2000 g |
| Gewebestreifenbreite: | 25 mm |

Angegeben ist als Abrieb die Abnahme der Gewebedicke in µm.

**Tabelle 3:**

| Beispiel | Polyester¹⁾ (Gew. %) | TPE-E (Gew. %) | Polycarbonat (Gew.%) | polymeres Carbodiimid (Gew.%) | Abrieb (µm) | Bemerkungen |
|---|---|---|---|---|---|---|
| V1 | 100 | - | - | - | 102 | 100% PET als Vergleich |
| V2 | 75 | 25 | - | - | 106 | |
| V3 | 74,5 | 25 | 0,5 | - | 96 | Einfluss des Polycarbonats |
| V4 | 74,2 | 25 | 0,8 | - | 90 | |
| V5 | 73,8 | 25 | 1,2 | - | 86 | |
| V6 | 73 | 25 | - | 2 | 95 | Einfluss des Carbodiimids |
| V7 | 71 | 25 | - | 4 | 87 | |
| V8 | 69 | 25 | - | 6 | 85 | |
| 4 | 70,5 | 25 | 0,5 | 4 | 44 | Einfluss der Kombination von Polycarbonat und Carbodiimid |
| 5 | 70,2 | 25 | 0,8 | 4 | 42 | |
| 6 | 73,8 | 25 | 1,2 | 4 | 41 | |

| | | | | | | |
|---|---|---|---|---|---|---|
| ¹⁾In Vergleichsbeispiel V1 wurde Polyethylenterephthalat PET eingesetzt; in den übrigen Vergleichsbeispielen und Beispielen der Tabelle 3 wurde Polyester der PET Type 153 eingesetzt. | | | | | | |

Überraschend ist die deutliche Verbesserung der Abriebbeständigkeit durch die Verwendung der erfindungsgemäßen Monofilamente. Für die erfindungsgemäßen Varianten der mehrlagigen Forminggewebe wurden 41 bis 44 µm Abrieb ermittelt gegenüber 85 - 96 µm Abrieb bei Verwendung von nur durch Polycarbonat bzw. nur durch Carbodiimid stabilisierten Monofilamenten bzw. 102 bis 106 µm Abrieb bei Verwendung von nur aus Polyester bestehenden Monofilamenten.

## Patentansprüche

1. Polyester-Monofilament enthaltend
a) 60 bis 85 Gew. % eines mit Dicarbonsäure modifizierten Polyethylenterephthalat,
b) 14,4 bis 30 Gew. % eines thermoplastischen elastomeren BlockCopolymers,
c) 0,05 bis 10 Gew. % eines Polycarbonats, und
d) 0,1 bis 10 Gew. % eines Carbodiimid-Stabilisators, wobei die Mengenangaben auf die Gesamtmenge des Monofilaments bezogen sind.

2. Polyester-Monofilament nach Anspruch 1, **dadurch gekennzeichnet**, dassdas mit Dicarbonsäure modifizierte Polyethylentere-phthalat ein mit aromatischer Dicarbonsäure modifiziertes Polyethylenterephthalat oder ein mit aliphatischer Dicarbonsäure modifiziertes Polyethylenterephthalat ist.

3. Polyester-Monofilament nach Anspruch 2, **dadurch gekennzeichnet, dass** das mit aromatischer Dicarbonsäure modifizierte Polyethylentere-phthalat ein mit Isophthalsäure modifiziertes Polyethylenterephthalat oder ein mit Phthalsäure modifiziertes Polyethylenterephthalat ist.

4. Polyester-Monofilament nach Anspruch 2, **dadurch gekennzeichnet, dass** das mit aliphatischer Dicarbonsäure modifizierte Polyethylen-terephthalat ein mit Adipinsäure modifiziertes Polyethylenterephthalat oder ein mit Sebazinsäure modifiziertes Polyethylenterephthalat ist.

5. Polyester-Monofilament nach mindestens einem der Ansprüche 1 bis 4, **dadurch gekennzeichnet, dass** Komponente b) ein thermoplastisches Polyurethan-Elastomer, ein thermoplastisches Polyester-Elastomer, ein thermoplastisches Pololefin-Elastomer, ein thermoplastisches Styrol-Blockcopolymer oder eine Kombination aus zwei oder mehreren dieser Komponenten ist.

6. Polyester-Monofilament nach Anspruch 5, **dadurch gekennzeichnet, dass** Komponente b) ein thermoplastisches Polyester-Elastomer ist, insbesondere ein Blockcopolymer enthaltend Polybutylenterephthalat-Blöcke und Polyethylenglykolterephthalat-Blöcke.

7. Polyester-Monofilament nach mindestens einem der Ansprüche 1 bis 6, **dadurch gekennzeichnet, dass** Komponente c) ein Polycarbonat ist, das sich von Bisphenolen, insbesondere von Bisphenol A ableitet.

8. Polyester-Monofilament nach mindestens einem der Ansprüche 1 bis 7, **dadurch gekennzeichnet, dass** Komponente d) ein polymeres Carbodiimid ist.

9. Polyester-Monofilament nach mindestens einem der Ansprüche 1 bis 8, **dadurch gekennzeichnet, dass** das Monofilament neben Komponenten a) bis d) zusätzlich 0,001 bis 10 Gew. % an üblichen Zusätzen e) enthält, insbesondere Antioxidantien, UV-Stabilisatoren, Füllstoffe, Pigmente, Biozide, Zusätze zur Erhöhung der elektrischen Leitfähigkeit, Zusätze zur Erhöhung der Abriebbeständigkeit, reibungsvermindernde Zusätze, Avivagen, Verarbeitungshilfsmittel, Weichmacher, Gleitmittel, Mattierungsmittel, Viskositätsmodifizierer, Kristallisationbeschleuniger oder Kombinationen von zwei oder mehreren dieser Zusätze.

10. Polyester-Monofilament nach mindestens einem der Ansprüche 1 bis 9, **dadurch gekennzeichnet, dass** dieses Komponente a) in einer Menge von 70 bis 80 Gew. %, Komponente b) in einer Menge von 20 bis 25 Gew. %, Komponente c) in einer Menge von 0,5 bis 3 Gew. % und Komponente d) in einer Menge von 0,3 bis 4,5 Gew. % enthält.

11. Polyester-Monofilament nach mindestens einem der Ansprüche 1 bis 10, **dadurch gekennzeichnet, dass** das Monofilament 70,5-79,1 Gew. % an mit 10 bis 15 Gew. 12 % Isophthalsäure modifiziertem PET, 20-25 Gew. % an TPE-E, 0,5-2,5 Gew. % an Polycarbonat und 0,4-4,5 Gew. % an polymerem Carbodiimid enthält

12. Textiles Flächengebilde enthaltend Fäden nach mindestens einem der Ansprüche 1 bis 11, insbesondere in Form eines Gewebes, Gestricks, Gewirkes, Geflechts oder Geleges.

13. Verwendung des Polyester-Monofilaments nach mindestens einem der Ansprüche 1 bis 11 als Papiermaschinenbespannung, in Förderbändern und als Filtrationssiebe.

14. Verwendung nach Anspruch 13, **dadurch gekennzeichnet, dass** die Papiermaschinenbespannung in der Blattbildungspartie und/oder in der Trockenpartie der Papiermaschine eingesetzt wird.

## Claims

1. A polyester monofilament containing
a) 60 to 85 wt.-% of a polyethylene terephathalate modified with dicarboxylic acid,
b) 14.4 to 30 wt.-% of a thermoplastic elastomeric block copolymer,
c) 0.05 to 10 wt.-% of a polycarbonate, and
d) 0.1 to 10 wt.-% of a carbodiimide stabilizer, wherein the quantities are based on the total amount of the monofilament.

2. The polyester monofilament according to claim 1, wherein the polyethylene terephthalate modified with dicarboxylic acid is a polyethylene terephthalate modified with aromatic dicarboxylic acid or a polyethylene terephthalate modified with aliphatic dicarboxylic acid.

3. The polyester monofilament according to claim 2, wherein the polyethylene terephtalate modified with aromatic dicarboxylic acid is a polyethylene terephthalate modified with isophthalic acid or a polyethylene terephthalate modified with phthalic acid.

4. The polyester monofilament according to claim 2, wherein the polyethylene terephtalate modified with aliphatic dicarboxylic acid is a polyethylene terephthalate modified with adipic acid or a polyethylene terephthalate modified with sebacic acid.

5. The polyester monofilament according to at least one of the claims 1 to 4, wherein component b) is a thermoplastic polyurethane elastomer, a thermoplastic polyester elastomer, a thermoplastic polyolefin elastomer, a thermoplastic styrene-blockcopolymer or a combination of two or more of these components.

6. The polyester monofilament according to claim 5, wherein component b) is a thermoplastic polyester elastomer, preferably a blockcopolymer comprising blocks of polybutylene terephthalate and blocks of polyethylene glycol terephthalate.

7. The polyester monofilament according to at least one of the claims 1 to 6, wherein component c) is a polycarbonate that is derived from bisphenols, preferably from Bisphenol A.

8. The polyester monofilament according to at least one of the claims 1 to 7, wherein component d) is a polymeric carbodiimide.

9. The polyester monofilament according to at least one of the claims 1 to 8, wherein the monofilament contains besides components a) to d) in addition 0.001 to 10 wt.-% of common additives e), preferably antioxidants, UV-stabilizers, fillers, pigments, biocides, additives for increasing the electrical conductivity, additives for increasing the abrasion resistance, friction reducing additives, avivages, processing aids, plasticizers, lubricants, matting agents, viscosity modifiers, cristallization promoters or combinations of two or more of these additives.

10. The polyester monofilament according to at least one of the claims 1 to 9, wherein this contains component a) in an amount from 70 to 80 wt.-%, component b) in an amount from 20 to 25 wt.-%, component c) in an amount from 0.5 to 3 wt.-% and component d) in an amount from 0.3 to 4,5 wt.-%.

11. The polyester monofilament according to at least one of the claims 1 to 10, wherein the monofilament comprises 70.5-79.1 wt.-% of PET modified with 10 to 15 wt.-% of isophthalic acid, 20-25 wt.-% of TPE-E, 0.5-2.5 wt.-% of polycarbonate and 0.4-4.5 wt.-% of polymeric carbodiimide.

12. A textile fabric comprising threads according to at least one of the claims 1 to 11, preferably a fabric, a knitting, a knitted fabric, a mesh fabric or a laid fabric.

13. Use of a polyester monofilament according to at least one of claims 1 to 11 as paper machine clothing, in conveyor belts and as filtration screens.

14. Use according to claim 13, wherein the paper machine clothing is used in the sheet formation section and/or in the dryer section of the paper machine.

## Revendications

1. Monofilament de polyester contenant
a) de 60 à 85 % en poids d'un polyéthylène téréphtalate modifié par un acide dicarboxylique,
b) de 14,4 à 30 % en poids d'un copolymère à blocs élastomère thermoplastique,
c) de 0,05 à 10 % en poids d'un polycarbonate, et
d) de 0,1 à 10 % en poids d'un stabilisateur carbodiimide, les quantités étant basées sur la quantité totale du monofilament.

2. Monofilament de polyester selon la revendication 1, **caractérisé en ce que** le polyéthylène téréphtalate modifié par un acide dicarboxylique est un polyéthylène téréphtalate modifié par un acide dicarboxylique aromatique ou un polyéthylène téréphtalate modifié par un acide dicarboxylique aliphatique.

3. Monofilament de polyester selon la revendication 2, **caractérisé en ce que** le polyéthylène téréphtalate modifié par un acide dicarboxylique aromatique est un polyéthylène téréphtalate modifié par de l'acide isophtalique ou un polyéthylène téréphtalate modifié par de l'acide phtalique.

4. Monofilament de polyester selon la revendication 2, **caractérisé en ce que** le polyéthylène téréphtalate modifié par un acide dicarboxylique aliphatique est un polyéthylène téréphtalate modifié par de l'acide adipique ou un polyéthylène téréphtalate modifié par de l'acide sébacique.

5. Monofilament de polyester selon au moins l'une des revendications 1 à 4, **caractérisé en ce que** le composant b) est un élastomère de polyuréthane thermoplastique, un élastomère de polyester thermoplastique, un élastomère de pololéfine thermoplastique, un copolymère à blocs de styrène thermoplastique ou une combinaison de deux ou plusieurs de ces composants.

6. Monofilament de polyester selon la revendication 5, **caractérisé en ce que** le composant b) est un élastomère de polyester thermoplastique, en particulier un copolymère à blocs contenant des blocs de téréphtalate de polybutylène et des blocs de téréphtalate de polyéthylèneglycol.

7. Monofilament de polyester selon au moins l'une des revendications 1 à 6, **caractérisé en ce que** le composant c) est un polycarbonate dérivé de bisphénols, en particulier de bisphénol A.

8. Monofilament de polyester selon au moins l'une des revendications 1 à 7, **caractérisé en ce que** le composant d) est un carbodiimide polymère.

9. Monofilament de polyester selon au moins l'une des revendications 1 à 8, **caractérisé en ce que** le monofilament contient, en plus des composants a) à d), de 0,001 à 10 % en poids d'additifs habituels e), en particulier des antioxydants, des stabilisateurs UV, des charges, des pigments, des biocides, des additifs pour augmenter la conductivité électrique, des additifs pour augmenter la résistance à l'abrasion, des additifs réduisant le frottement, des agents d'avivage, des auxiliaires de traitement, des agents adoucissants, des lubrifiants, des agents matants, des modificateurs de viscosité, des accélérateurs de cristallisation ou des combinaisons de deux ou plusieurs de ces additifs.

10. Monofilament de polyester selon au moins l'une des revendications 1 à 9, **caractérisé en ce que** celui-ci contient le composant a) dans une quantité de 70 à 80 % en poids, le composant b) dans une quantité de 20 à 25 % en poids, le composant c) dans une quantité de 0,5 à 3 % en poids et le composant d) dans une quantité de 0,3 à 4,5 % en poids.

11. Monofilament de polyester selon au moins l'une des revendications 1 à 10, **caractérisé en ce que** le monofilament contient de 70,5 à 79,1% en poids de PET modifié par 10 à 15 % en poids d'acide isophtalique, de 20 à 25 % en poids de TPE-E, de 0,5 à 2,5 % en poids de polycarbonate et de 0,4 à 4,5 % en poids de carbodiimide polymère.

12. Structure plane textile contenant des fils selon au moins l'une des revendications 1 à 11, en particulier sous la forme d'un tissu, d'un tricot maille, d'un tricot chaîne, d'une tresse ou d'une nappe.

13. Utilisation du monofilament de polyester selon au moins l'une des revendications 1 à 11 comme habillage de machine à papier, dans les bandes transporteuses et comme tamis de filtration.

14. Utilisation selon la revendication 13, **caractérisée en ce que** l'habillage de machine à papier est utilisé dans la partie de formation de la feuille et/ou dans la partie sèche de la machine à papier.
